# EUROPEAN PATENT SPECIFICATION

(11) **EP 0 985 322 B1**
(45) Date of publication and mention of the grant of the patent: **28.06.2006**
(21) Application number: 98923861.3
(22) Date of filing: 28.05.1998
(51) Int. Cl.: H04Q 3/00

(54) **WORLD WIDE WEB INTERFACE TO TELECOM SERVICE CREATION ENVIRONMENT**
WORLDWIDE-WEB SCHNITTSTELLE ZUR TELEKOMMUNIKATIONS-DIENSTERZEUGUNGSUMGEBUNG
INTERFACE WWW POUR ENVIRONNEMENT DE CREATION DE SERVICES DE TELECOMMUNICATIONS

(30) Priority: 30.05.1997 US 48331 P; 26.08.1997 US 918383
(43) Date of publication of application: 15.03.2000
(73) Proprietor: Alcatel USA Sourcing, L.P., Plano, TX 75075 (US)
(72) Inventor: LEE, Charles, C., Jr., Plano, TX 75075 (US); DESANDO, Jeffrey, J., Bolingbrook, IL 60440 (US); MOCK, Scott, D., San Antonio, TX 78250 (US)
(74) Representative: Rausch, Gabriele
(86) International application number: PCT/US1998/011033
(87) International publication number: WO 1998/054915

(56) References cited:
- ATKINS D L ET AL: "INTEGRATED WEB AND TELEPHONE SERVICE CREATION" BELL LABS TECHNICAL JOURNAL, vol. 2, no. 1, 1 January 1997, pages 19-35, XP002036350
- TURNER G D: "SERVICE CREATION" BT TECHNOLOGY JOURNAL, vol. 13, no. 2, 1 April 1995, pages 80-86, XP000500759

## Description

### TECHNICAL FIELD OF THE INVENTION

This invention is related in general to the field of telecommunications equipment. More particularly, the invention is related to a World Wide Web (WWW) interface to a telecom service creation environment (SCE).

Atkins D L et al: "Integrated Web and Telephone Service Creation", Bell Labs Technical Journal, volume 2, no 1, 1 January 1997, pages 19 to 35 discloses techniques for integrated web and telephone service creation. Maw1, an application-orientated language, is used to produce complex form-based services. A simple Mawl service contains three main abstractions: sessions, arbiters and templates. Each arbiter has certain input values, which are supplied by service logic, and output variables, which are extracted from a users response. When a running service detects that a screen-based browser is active, it uses MHTML templates to generate HTML, which is sent to a browser.

### SUMMARY OF THE INVENTION

Therefore, a need has arisen for a way to allow a service subscriber to quickly and easily make changes or updates to telecommunications service parameters. In this way, the service subscriber can fully take advantage of the flexibility of telecommunications services.

In one aspect of the invention, a web interface is provided as claimed in claim 1.

In another aspect of the invention, a method is provided as claimed in claim 14.

### BRIEF DESCRIPTION OF THE DRAWINGS

For a better understanding of the present invention, reference may be made to the accompanying drawings, in which:
FIGURE 1 is a top level block diagram of the WWW interface to a service creation environment according to an embodiment of the present invention;
FIGURE 2 is a simplified block diagram of the WWW interface to a service creation environment according to an embodiment of the present invention;
FIGURE 3 is a flowchart of a database change service example according to an embodiment of the present invention;
FIGURE 4 is an exemplary web page providing a selection of available services according to an embodiment of the present invention;
FIGURE 5 is an exemplary first web page for providing a database change capability for a call rollover service constructed by a TopLevelApplet.class java program according to an embodiment of the present invention;
FIGURE 6 is an exemplary web page prompting user input for configuration and information constructed by a ConfigApplet.class java program according to an embodiment of the present invention;
FIGURE 7 is an exemplary web page of the database change service constructed by a PhoneApplet.class java program according to an embodiment of the present invention;
FIGURE 8 is an exemplary web page for selecting a number of parameters to change of the database change service constructed by LevelApplet.class java program according to an embodiment of the present invention;
FIGURE 9 is an exemplary web page for selecting a destination to set a flag for effecting call roll over of the database change service constructed by LevelApplet.class java program according to an embodiment of the present invention;
FIGURE 10 is an exemplary web page for selecting the start or stop time to be specified for the call roll over service of the database change service constructed by LevelApplet.class java program according to an embodiment of the present invention;
FIGURE 11 is an exemplary web page for entering a start time for the call roll over service of the database change service constructed by PhoneApplet.class java program according to an embodiment of the present invention;
FIGURE 12 is an exemplary web page for entering a stop time for the call roll over service of the database change service constructed by PhoneApplet.class java program according to an embodiment of the present invention;
FIGURE 13 is an exemplary web page for selecting a destination for the call roll over service the database change service constructed by LevelApplet.class java program according to an embodiment of the present invention;
FIGURE 14 is an exemplary web page for entering a specification of a destination for the call roll over service of the database change service constructed by PhoneApplet.class java program according to an embodiment of the present invention; and
FIGURE 15 is an exemplary web page of the database change service confirming that the database has been updated with user input according to an embodiment of the present invention.

### DETAILED DESCRIPTION OF THE INVENTION

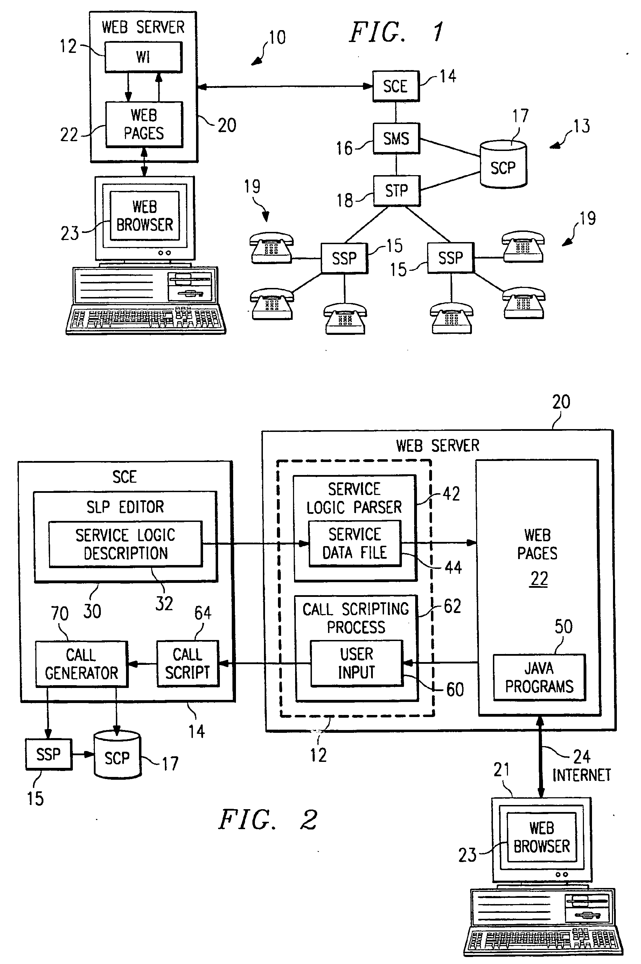

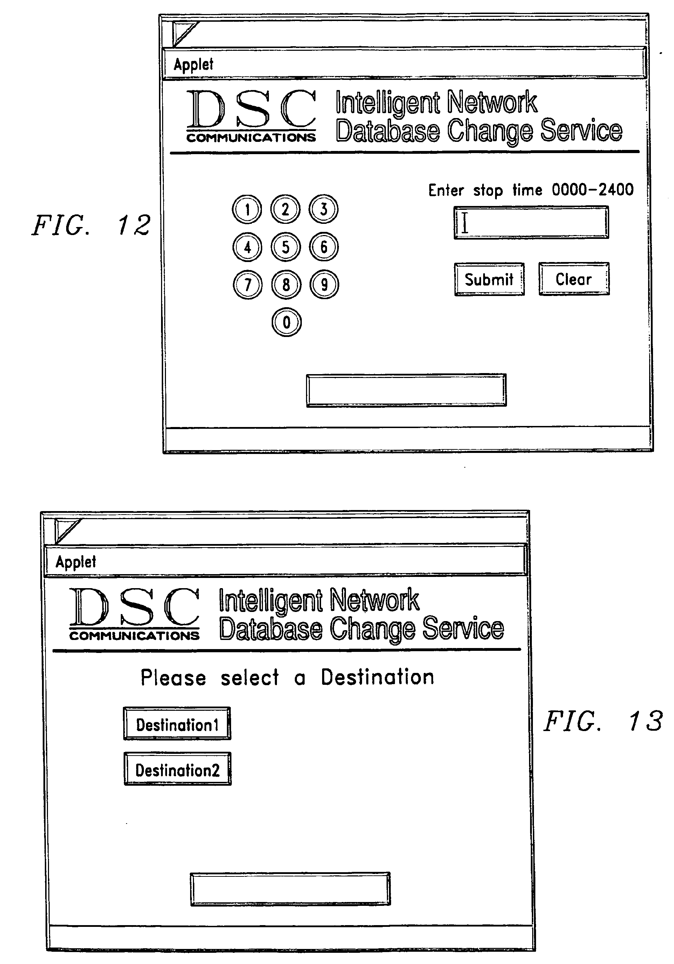

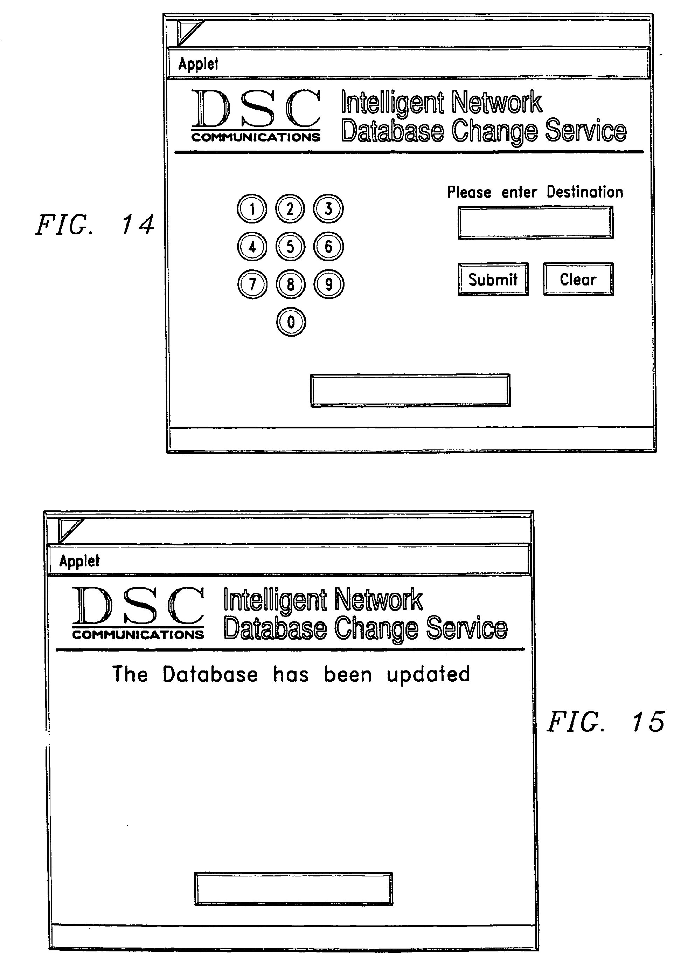

The preferred embodiment(s) of the present invention is (are) illustrated in FIGURES 1-15, like reference numerals being used to refer to like and corresponding parts of the various drawings.

FIGURE 1 is a top level block diagram 10 of a World Wide Web (WWW) or web interface (WI) 12 to a service creation environment (SCE) 14. Web interface 12 may reside on a web server 20 on which one or more web pages 22 are stored and accessible by a web browser 23, such as Netscape Navigator® and Microsoft Internet Explorer® . Service creation environment 14 is a part of an Advanced Intelligent Network 13, and is typically coupled to a service switching point (SSP) 15 through a service management system (SMS) 15, a service control point (SCP) 17, and a signal transfer point (STP) 18. Service switching point 15 is coupled to telephone customers and service subscribers 19. New services are defined in service creation environment 14 and then downloaded to the appropriate network nodes, such as service control point 17 and service switching point 15, for execution. Communications of control messages to download service logic programs and other data between the network nodes may follow a standard protocol, such as Signaling System No. 7 (SS7).

Service creation environment 14 is used to create service logic programs which describe the logic flow of telecommunications services such as premium rate, free phone, calling card, virtual net, fully flexible routing, and debit card. Premium rate service translates a dialed number into a network routing address after verification that the dialed number is not blocked from the call originator. The caller is then connected to the translated number and charges are billed to the caller. Free phone is a service that translates a dialed number into a network routing address, which is dependent on the first three digits of the calling party number, the day of the week, the time of day, and the specific network numbers designated by the service subscriber. The charges for the call are billed to the called party. The calling card service allows a user to enter a card number, an optional personal identification number, and destination number from the caller. The call is then completed to the collected destination number and billed to the account specified by the card number. The virtual net service gives a group of callers the perception of a private dialing plan, but public facilities owned by the network provider are used to route and connect calls. The caller dials a public access number, and a number of digits, which may be a private numbering plan (PNP) extension, a feature access code plus remaining digits, or an offnet access code plus a public number. The follow me service rolls telephone calls to a first destination number to be rolled over to a second destination number. The user may use the setup service to specify the second destination number, the number of rings at the first destination number before rolling over the call, set the time of day and day of week for the roll over telephone calls, etc. The fully flexible routing service is used to route calls to different locations depending on predefined variables. The calls may be routed depending on whether the call occurs on a weekday or during the weekend and whether the call originates from a local telephone. The call may also be routed depending on user input and the time of day. The debit card service allows a user to deposit a certain amount of funds into an account and to deduct the telephone call charges from the available funds in the account. The debit card service may be setup with an account number, add to or specify the amount of funds in the account, and activate or deactivate the service.

FIGURE 2 is a simplified block diagram of web interface 12 to service creation environment 14. Service creation environment 14 includes a service logic program (SLP) editor 30, which is used to create a service logic description file 32 that describes the logic flow of a service. Service logic description 32 is provided, downloaded or otherwise communicated to web server 20. A service logic parser 42 of web interface 12 receives and parses service logic description file 32, and creates a service data file 44 therefrom in a web browser readable format, such as hypertext markup language (HTML). Service logic parser 42 may be coded in a scripting language such as practical extraction and report language (PERL) using the common gateway interface (CGI) standard. One or more java programs or applets 50 may be used to define the web page formats within which the HTML service data file 44 is displayed. In this manner, web pages 22 provide a graphical interface to the user and prompt the user for input used to setup, activate, deactivate, and update telecommunications services the user subscribes to. Note that java is an exemplary programming language that may be used to construct the web pages and read the HTML service data files, but other languages may also be used.

A user using a web browser 23 executing on a computer, workstation, telephone, or some other device 21 may download web pages 22 along with java programs 50 over the Internet 24. Web pages 22 display decision options, telephone keypads, and associated information to solicit and receive user input regarding service updates and changes. User inputs 60 entered via each web page 22 are received by web browser 23 and communicated back to web server 20 over the Internet 24. User inputs 60 are then continuously provided to a call scripting process 62 residing on web server 20 that reformats the user inputs and generates a call script file 64 therefrom. Call script file 64 is then transmitted to service creation environment 14. A call generator 70 residing in service creation environment 14 continuously looks for call script file 64 in predetermined locations in memory, and once one is found, sends it to service switching point 26 for execution and/or to service control point 17 to update the data stored therein. Alternatively, service switching point 26 may serve as an intermediary and communicate the update data to service control point 17. Thereafter, call generator 70 then deletes call script file 64 from memory and continues looking for the next call script file 64.

As described above, each service created and defined in service creation environment 14 has a service logic description 32 which contains all the information about the service's parameters and run format. Service logic descriptions 32 preferably follow a predefined format so that they may be correctly read and parsed by service logic parser 42. Identifiers or keywords are used in service logic descriptions 32 to identify the lines of text therein. Exemplary identifiers are listed as follows:

| | |
|---|---|
| SERVICE | name of service |
| TRIGGER | number sent to service switching point to start running the service |
| DECISION | name of page |
| BUTTON | creates a button and the associated text |
| LENGTH | display phone keypad page and specify the character length of requested user input |
| CODE | display phone keypad page and specify the exact input required from the user |
| -> | specify the next page name (specified by DECISION) to be displayed after a certain user input, e.g. LENGTH, CODE, BUTTON |

For example, a service logic description for the change database service is shown below:

| **data_change.dat** | |
|---|---|
| Service: | Database Change |
| Trigger: | 799555555 |
| Decision: | "Please Enter your PIN code" |
| code: | 1234 -> "Select one of the following options" |
| Decision: | "Select one of the following options" |
| button: | Destination -> "Please select a Destination" |
| button: | Flag -> "Set flag for a Destination" |
| button: | Time -> "Select a Time" |
| Decision: | "Please select a Destination" |
| button: | Destination1 -> "Please enter Destination" |
| button: | Destination2 -> "Please enter Destination" |
| Decision: | "Please enter Destination" |
| length: | 10 -> "The Database has been updated" |
| Decision: | "Set flag for a Destination" |
| button: | Destination1 -> "Select one of the following options" |
| button: | Destination2 -> "Select one of the following options" |
| Decision: | "Select a Time" |
| button: | StartTime -> "Enter start time 0000-2400" |
| button: | StopTime -> "Enter stop time 0000-2400" |
| Decision: | "Enter start time 0000-2400" |
| length: | 4 -> "Select one of the following options" |
| Decision: | "Enter stop time 0000-2400: |
| length: | 4 -> "Select one of the following options" |
| Decision: | "The Database has been updated" |

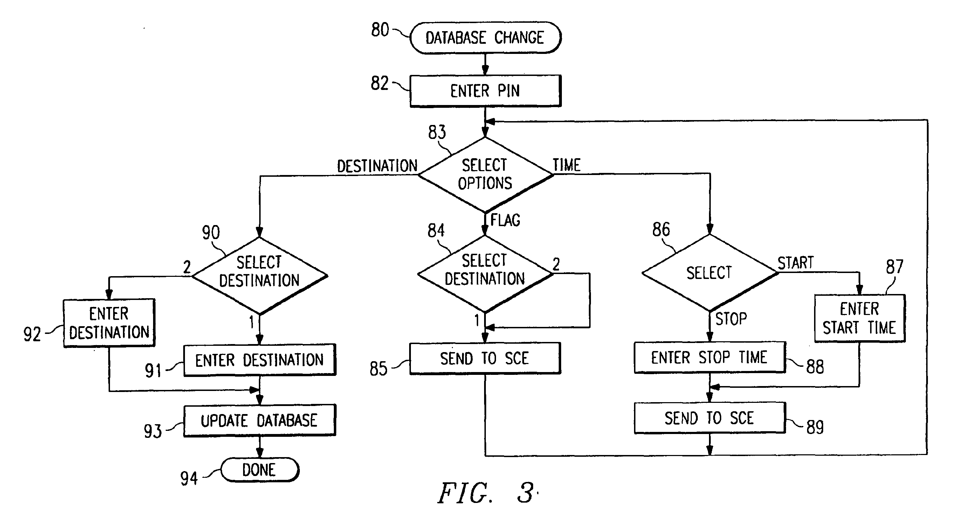

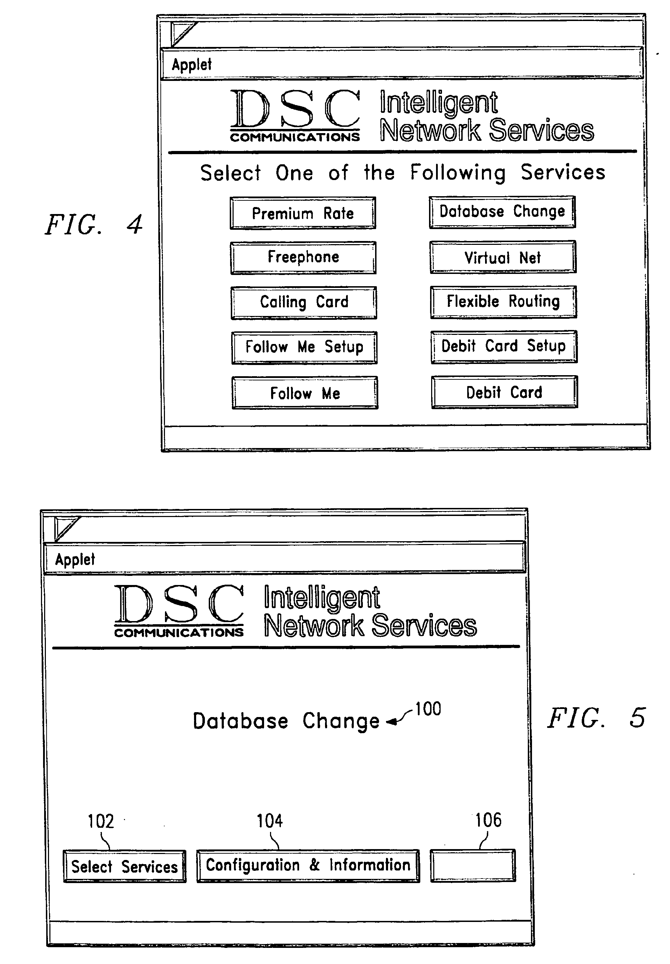

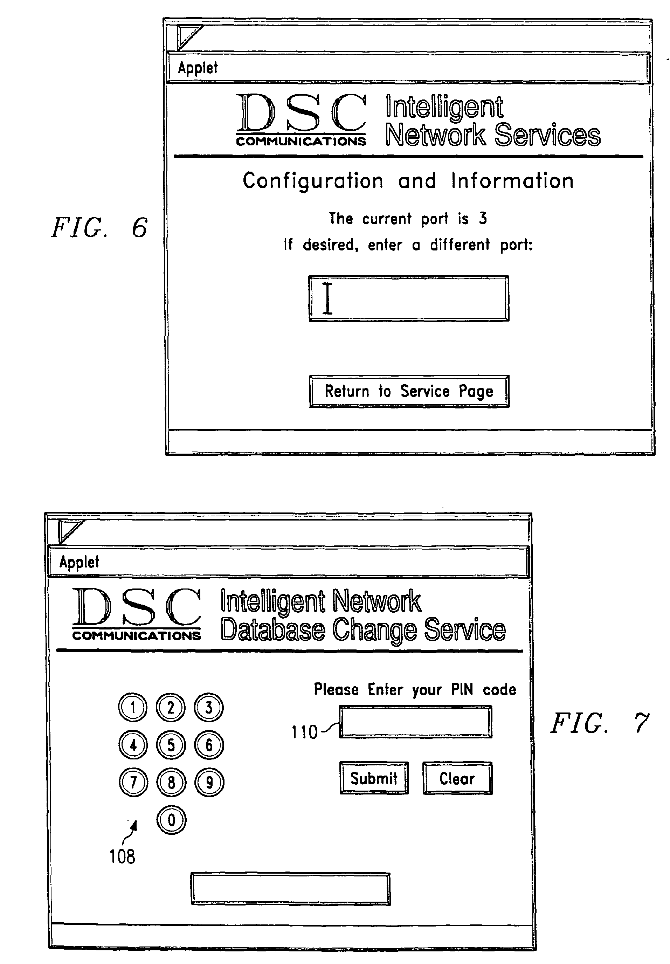

Referring also to FIGURE 3 for a flowchart representation of a database change service 80 data file, the first line of the data file is flagged by the identifier SERVICE. The parameter provided: "Database Change" is read by a java program, TopLevelApplet.java, and displayed on the web page as the name of the service 100 as shown in FIGURE 5. The second line provides a trigger for initiating the database service when the telephone is taken off the hook. TopLevelApplet.java provides for three buttons to be displayed at the bottom of the page: select services 102, configuration & information 104, and start service 106. Select services button 102, when selected, returns the user to a first web page which displays the services available for selection, as shown in FIGURE 4. Configuration & information button 104, when chosen, displays a web page that allows the user to enter a port or telephone from which to originate the call, as shown in FIGURE 6.

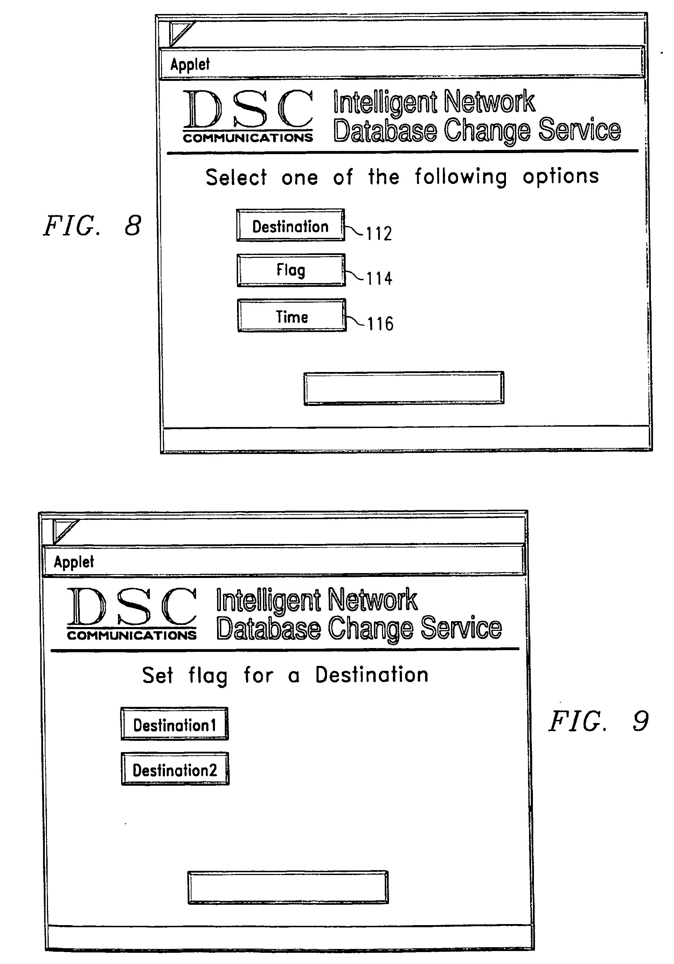

If start service button 106 were chosen, the user is prompted for a personal identification number (PIN) by a java program which is specified by the first DECISION line and the associated CODE line in the service logic description. Referring to FIGURE 7, it may be seen that the parameter specified after the DECISION identifier becomes the title of the web page and the CODE identifier specifies that a PhoneApplet.java program which displays a telephone keypad 108 and a data entry field 110 be displayed to prompt for user input. If as in step 82 the user enters the correct code, in this case specified in the service logic description as "1234", the -> identifier which follows specifies the next web page to be displayed, shown in FIGURE 8. Three buttons and the text to be associated with each button are specified in the service logic description: destination 112, flag 114, and time 116. A java program or applet, LevelApplet.java, which displays the title and provides for up to a maximum number of buttons may be used. This is shown as step 83 in FIGURE 3.

If the user selects the flag option in step 83, LevelApplet.java is used again to display the next web page, shown in FIGURE 9. As specified by the next DECISION line and the associated BUTTON identifiers in the service logic description, two destinations are available for selection by the user to indicate which destination to route the calls to. When the user selects one of the destinations, as shown in step 84, the selection is sent to service creation environment 14 as in step 85. Upon selection of a destination for a flag, the web page in FIGURE 8 is displayed again to allow the user to select an option, as specified in the service logic description.

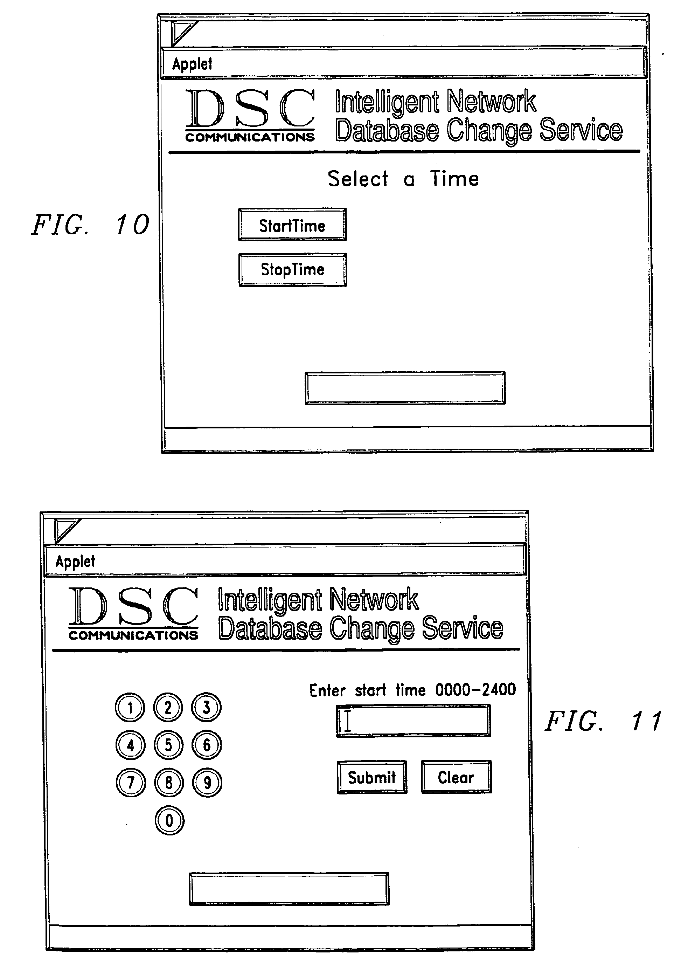

If in step 83 the user chooses time as the item to change, then LevelApplet.java displays a web page shown in FIGURE 10 with "Select a Time" as the title and two buttons to allow the user to choose the start time or the stop time to change. This is shown as step 86 in FIGURE 3. When the start time button is selected, the PhoneApplet.java web page displays the title "Enter start time 0000-2400" and a phone keypad. The LENGTH identifier specifies that the user may enter a string of length four to indicate the starting time of day to begin rolling telephone calls to a different destination. Similarly, when the stop time button is selected, the PhoneApplet.java web page displays the title "Enter stop time 0000-2400" and a phone keypad to allow the entry of stop time for rolling telephone calls to the second destination. The users enters the start and/or stop times, which is sent to service creation environment 14, as shown in steps 87-89. The web page in FIGURE 3 is then displayed to allow the user to select further database change options.

The user may select the destination option at the web page in FIGURE 3 and at step 83 to select the destination to which telephone calls are to be rolled over. LevelApplet.java displays a title "Please Select a Destination" and two buttons, destination 1 and destination 2, as specified by the service logic description. This is shown as step 90 in FIGURE 3. Upon selection of one destination, as in steps 91 or 92, PhoneApplet.java displays the "Please enter Destination" title and a phone keypad to allow the user to enter a 10-digit destination telephone number, as specified by the service logic description. Upon submission of a 10-digit number, LevelApplet.java displays "The Database has been updated" as the title with no buttons to inform the user that the submitted number is stored in service control point 17, as shown in FIGURE 15 and indicated in step 93 of the flowchart (FIGURE 3). From this web page, TopLevelApplet.java is called to display the web page shown in FIGURE 5, since no subsequent steps or web pages are specified by the service logic description. Therefore, the service is complete, as in step 94.

Exemplary service logic descriptions for premium rate, free phone, calling card, follow me, virtual net, flexible routing, and debit card services are provided in the charts below for reference.

| **call_card.dat** | |
|---|---|
| Service: | Calling Card |
| Decision: | "Please Choose 227 Number" |
| button: | 2271112222 -> "Please select a Destination" |
| button: | 227333444 -> "Please Enter the Card Number" |
| Decision: | "Please select a Destination" |
| length: | 10 -> "Please Enter Card Number" |
| Decision: | "Please Enter Card Number" |
| code: | 987654321 -> "Your phone call is being completed" |
| Decision: | "Please Enter the Card Number" |
| code: | 987654321 -> "Please Enter your PIN code" |
| Decision: | "Please Enter your PIN code" |
| code: | 11111 -> "Please select the Destination" |
| Decision: | "Please select the Destination" |
| length: | 10 -> "Your phone call is being completed" |
| Decision: | "Your phone call is being completed" |

| **debit_card.dat** | |
|---|---|
| Service: | Debit Card |
| Trigger: | 222 |
| Decision: | "Enter Credit Card Number" |
| code: | 1234567887654321 -> "Please Enter Your PIN Code" |
| Decision: | "Please Enter Your PIN Code" |
| code: | 1234 -> "Please Enter Destination Number" |
| Decision: | "Please Enter Destination Number" |
| length: | 10 -> "Your Phone Call is being completed" |
| Decision: | "Your Phone Call is being completed" |

| **debit_eard_Setup.dat** | |
|---|---|
| Service: | Debit Card Setup |
| Trigger: | 223 |
| Decision: | "Enter Credit Card Number" |
| code: | 1234567887654321 -> "Please Enter Your PIN Code" |
| Decision: | "Please Enter Your PIN Code" |
| code: | 1234 -> "Select One of the Following" |
| Decision: | "Select One of the Following" |
| button: | Activate -> "Activation Status has been Updated" |
| button: | Deactivate -> "Activation Status has been Updated" |
| button: | Money_Available -> "Enter Amount of Credit Available" |
| Decision: | "Enter Amount of Credit Available" |
| length: | 4 -> "Debit Card Setup has been completed" |
| Decision: | "Activation Status has been Updated" |
| button: | Main_Menu -> "Select One of the Following" |
| button: | Exit -> "Debit Card Setup has been completed" |
| Decision: | "Debit Card Setup has been completed" |

| **flex_route.dat** | |
|---|---|
| Service: | Flexible Routing |
| Decision: | "Please Choose 337 Number" |
| button: | 3371111 -> "Your Phone Call is being completed" |
| button: | 3372222 -> "Sales and Repair" |
| Decision: | "Sales and Repair" |
| button: | Sales -> "Your Phone Call is being completed" |
| button: | Repair -> "Your Phone Call is being completed" |
| Decision: | "Your Phone Call is being completed" |

| **follow_me.dat** | |
|---|---|
| Service: | Follow Me |
| Trigger: | 002 |
| Decision: | "Connecting to Destination Number" |

| **follow_me.Setup.dat** | |
|---|---|
| Service: | Follow Me Setup |
| Trigger: | 873283 |
| Decision: | "Please Enter your PIN code" |
| code: | 12345 -> "Select one of the following options" |
| Decision: | "Select one of the following options" |
| button: | Set_Routing -> "Choose one of the following options" |
| button: | Update_Setup -> "Which one do you wish to update" |
| button: | Exit -> "The Database has been updated" |
| Decision: | "Choose one of the following options" |
| button: | Destination -> "Change Destination in Database" |
| button: | TimeDay -> "Enter start time 0000-2400" |
| button: | DayWeek -> "Enter day of week to start 1-7" |
| button: | FaxNum -> "Please enter Fax Number" |
| Decision: | "Which one do you wish to update" |
| button: | VoiceFlag -> "Updating Flags" |
| button: | FollowMeFlag -> "Updating Flags" |
| button: | NumberOfRings -> "Please choose the number of rings" |
| button: | Manual_Setup -> "Manual Follow Me Changes" |
| Decision: | "Change Destination in Database" |
| button: | Add_Destination -> "Please Enter Destination" |
| button: | Delete_Destination -> "Change Destination in Database" |
| button: | Modify_Desination -> "Please Enter Destination" |
| button: | Main_Menu -> "Select one of the following options" |
| Decision: | "Please Enter Destination" |
| length: | 10 -> "Change Destination in Database" |
| Decision: | "Updating Flags" |
| button: | Update_Flag -> "Select one of the following options" |
| button: | Main_Menu -> "Select one of the following options" |
| Decision: | "Please choose the number of rings" |
| length: | 1 -> "Select one of the following options" |
| Decision: | "Manual Follow Me Changes" |
| button: | Set_Man_Flag -> "Updating Man Flag" |
| button: | Set_Man_Destination -> "Please enter Manual Destination" |
| button: | Main_Menu -> "Select one of the following options" |
| Decision: | "Please enter Manual Destination" |
| length: | 10 -> "Manual Follow Me Changes" |
| Decision: | "Updating Man Flag" |
| button: | Update_Man_Flag -> "Manual Follow Me Changes" |
| button: | Back_To_Menu -> "Manual Follow Me Changes" |
| Decision: | "Please enter Fax Number" |
| length: | 10 -> "Select one fo the following options" |
| Decision: | "Enter day of week to start 1-7" |
| length: | 1 -> "Enter day of week to stop 1-7" |
| Decision: | "enter day of week to stop 1-7" |
| length: | 1 -> "Enter Day Destination" |
| Decision: | "Enter Day Destination" |
| length: | 10 -> "Select one of the following options: |
| Decision: | "Enter start time 0000-2400" |
| length: | 4 -> "Enter stop time 0000-2400" |
| Decision: | "Enter stop time 0000-2400" |
| length: | 4 -> "Which Destination Number to Update" |
| Decision: | "Which Destination Number to Update" |
| button: | Destination1 -> "Enter Time Destination" |
| button: | Destination2 -> "Enter Time Destination" |
| button: | Destination3 -> "Enter Time Destination" |
| button: | Destination4 -> "Enter Time Destination" |
| button: | Destination5 -> "Enter Time Destination" |
| Decision: | "Enter Time Destination" |
| length: | 10 -> Please enter List Number" |
| Decision: | "Please enter List Number" |
| length: | 1 -> "Select one of the following options" |
| Decision: | "The Database has been updated" |

| **freephone.dat** | |
|---|---|
| Service: | Free Phone |
| Decision: | "Please Enter 800 Number" |
| length: | 10 -> "Your Phone Call is being completed" |
| Decision: | "Your Phone Call is being completed" |

| **prem_rate.dat** | |
|---|---|
| Service: | Premium Rate |
| Decision: | "Please Enter 900 Number" |
| length: | 10 -> "Your Phone Call is being completed" |
| Decision: | "Your Phone Call is being completed" |

| **virt_net.dat** | |
|---|---|
| Service: | Virtual Net |
| Decision: | "Please Enter Access Code" |
| length: | 0 -> "Your Phone Call is being completed" |
| Decision: | "Your Phone Call is being completed" |

| **debit_card.html** |
|---|
| <HTML> |
| <HEAD> |
| <title>Debit Card Service</title> |
| </HEAD> |
| <BODY> |
| <APPLET code="newsim.class" width=550 height=390> |
| <PARAM NAME=Service_Name VALUE="Debit Card "> |
| <PARAM NAME=Trigger VALUE=222> |
| <PARAM NAME=header1 VALUE="Enter Credit Card Number"> |
| <PARAM NAME=length1 VALUE=16> |
| <PARAM NAME=code1 VALUE=1234567887654321> |
| <PARAM.NAME=length2 VALUE=4> |
| <PARAM NAME=code2 VALUE=1234> |
| <PARAM NAME=next2_1 VALUE="Please Enter Destination Number"> |
| <PARAM NAME=header3 VALUE="Please Enter Destination Number"> |
| <PARAM NAME=length3 VALUE=10> |
| <PARAM NAME=next3_1 VALUE="Your Phone Call is being completed"> |
| <PARAM NAME=header4 VALUE="Your Phone Call is being completed"> |
| </APPLET> |
| </BODY> |
| </HTML> |

| **debit_card_Setup.html** |
|---|
| <title>Supercomm Demo</title> |
| </HEAD> |
| <BODY> |
| <APPLET code="newsim.class" width=550 height=390> |
| <PARAM NAME=Service_Name VALUE="Debit Card Setup "> |
| <PARAM NAME=Trigger VALUE=223> |
| <PARAM NAME=header1 VALUE="Enter Credit Card Number"> |
| <PARAM NAME=length1 VALUE=16> |
| <PARAM NAME=code1 VALUE=1234567887654321> |
| <PARAM NAME=next1_1 VALUE="Please Enter Your PIN Code"> |
| <PARAM NAME=header2 VALUE="Please Enter Your PIN Code"> |
| <PARAM NAME=length2 VALUE=4> |
| <PARAM NAME=code2 VALUE=1234> |
| <PARAM NAME=next2_1 VALUE="Select One of the Following"> |
| <PARAM NAME=header3 VALUE="Select One of the Following"> |
| <PARAM NAME=button3_1 VALUE=Activate> |
| <PARAM NAME=next3_1 VALUE="Activation Status has been Updated"> |
| <PARAM NAME=button3_2 VALUE=Deactivate> |
| <PARAM NAME=next3_2 VALUE="Activation Status has been Updated"> |
| <PARAM NAME=button3_3 VALUE=Money_Available> |
| <PARAM NAME=next3_3 VALUE="Enter Amount of Credit Available"> |
| <PARAM NAME=header4 VALUE="Enter Amount of Credit Available"> |
| <PARAM NAME=length4 VALUE=4> |
| <PARAM NAME=next4_1 VALUE="Debit Card Setup has been completed"> |
| <PARAM NAME=header5 VALUE="Activation Status has been Updated" |
| <PARAM NAME=button5_1 VALUE=Main_Menu> |
| <PARAM NAME=next5_1 VALUE="Select One of the Following"> |
| <PARAM NAME=button5_2 VALUE=Exit> |
| <PARAM NAME=next5_2 VALUE="Debit Card Setup has been completed"> |
| <PARAM NAME=header6 VALUE="Debit Card Setup has been completed"> |
| </APPLET> |
| </BODY> |
| </HTML> |

Premium rate service translates a dialed number into a network routing address after verification that the dialed number is not blocked from the call originator. The caller is then connected to the translated number and charges are billed to the caller. Free phone is a service that translates a dialed number into a network routing address, which is dependent on the first three digits of the calling party number, the day of the week, the time of day, and the specific network numbers designated by the service subscriber. The charges for the call are billed to the called party. The calling card service allows a user to enter a card number, an optional personal identification number, and destination number from the caller. The call is then completed to the collected destination number and billed to the account specified by the card number. The virtual net service gives a group of callers the perception of a private dialing plan, but public facilities owned by the network provider are used to route and connect calls. The caller dials a public access number, and a number of digits, which may be a private numbering plan (PNP) extension, a feature access code plus remaining digits, or an offnet access code plus a public number. The follow me service rolls telephone calls to a first destination number to be rolled over to a second destination number. The user may use the setup service to specify the second destination number, the number of rings at the first destination number before rolling over the call, set the time of day and day of week for the roll over telephone calls, etc. The fully flexible routing service is used to route calls to different locations depending on predefined variables. The calls may be routed depending on whether the call occurs on a weekday or during the weekend and whether the call originates from a local telephone. The call may also be routed depending on user input and the time of day. The debit card service allows a user to deposit a certain amount of funds into an account and to deduct the telephone call charges from the available funds in the account. The debit card service may be setup with an account number, add to or specify the amount of funds in the account, activate, and deactivate the service.

As described above, service logic description 32 of the services is parsed by service logic parser 42 and reformatted into a service data file 44 having a web browser readable format. An exemplary service data file for the database change service in hypertext markup language is shown below.

| **data_change.html** |
|---|
| <HTML> |
| <HEAD> |
| <title>Testing</title> |
| </HEAD> |
| <BODY> |
| <APPLET code="newim.class" width=525 height=390> |
| <PARAM NAME=Service_Name VALUE="Database Change "> |
| <PARAM NAME=Trigger VALUE=799555555> |
| <PARAM NAME=header1 VALUE="Please Enter your PIN code"> |
| <PARAM NAME=length1 VALUE=4> |
| <PARAM NAME=code1 VALUE=1234> |
| <PARAM NAME=next1_1 VALUE="Select one of the following |
| options"> |
| <PARAM NAME=header2 VALUE="Select one of the following |
| option"> |
| <PARAM NAME=button2_1 VALUE=Destination> |
| <PARAM NAME=next2_1 VALUE="Please select a Destination"> |
| <PARAM NAME=button2_2 VALUE=Flag> |
| <PARAM NAME=next2_2 VALUE="Set flag for a Destination"> |
| <PARAM NAME=button2_3 VALUE=Time> |
| <PARAM NAME=next2_3 VALUE="Select a Time"> |
| <PARAM NAME=header3 VALUE="Please select a Destination"> |
| <PARAM NAME=button3_1 VALUE=Destination1> |
| <PARAM NAME=next3_1 VALUE="Please enter Destination"> |
| <PARAM NAME=button3_2 VALUE=Destination2> |
| <PARAM NAME=next3_2 VALUE="Please enter Destination"> |
| <PARAM NAME=header4 VALUE="Please enter Destination"> |
| <PARAM NAME=length4 VALUE=10> |
| <PARAM NAME=next4_1 VALUE="The Database has been |
| updated"> |
| <PARAM NAME=header5 VALUE="Set flag for a Destination"> |
| <PARAM NAME=button5_1 VALUE=Destination1> |
| <PARAM NAME=next5_1 VALUE="Select one of the following |
| options"> |
| <PARAM NAME=button5_2 VALUE=Destination2> |
| <PARAM NAME=next5_2 VALUE="Select one of the following |
| options"> |
| <PARAM NAME=header6 VALUE="Select a Time"> |
| <PARAM NAME=button6_1 VALUE=StartTime> |
| <PARAM NAME=next6_1 VALUE="Enter start time 0000-2400"> |
| <PARAM NAME=button6_2 VALUE=StopTime> |
| <PARAM NAME=next6_2 VALUE="Enter stop time 0000-2400"> |
| <PARAM NAME=header7 VALUE="Enter start time 0000-2400"> |
| <PARAM NAME=length7 VALUE=4> |
| <PARAM NAME=next7_1 VALUE="Select one of the following |
| options"> |
| <PARAM NAME=header8 VALUE="Enter stop time 0000-2400"> |
| <PARAM NAME=length8 VALUE=4> |
| <PARAM NAME=next8_1 VALUE="Select one of the following |
| options"> |
| <PARAM NAME=header9 VALUE="The Database has been |
| updated"> |
| </APPLET> |
| </BODY> |
| </HTML> |

Note that the applet code specified in the service data file is newsim.class, the compiled code of newsim.java. Java applet newsim.java is executed initially at the beginning of the web interface process to read in the parameters for all the web pages that are referenced by the selected service.

Although several embodiments of the present invention and its advantages have been described in detail, it should be understood that mutations, changes, substitutions, transformations, modifications, variations, and alterations can be made therein without departing from the teachings of the present invention, the scope of the invention being set forth by the appended claims.

## Claims

1. A web interface (12) to a service creation environment (14), comprising:
a service logic parser (42) adapted to receive a service logic description (32) from the service creation environment, parse the service logic description, and generate a web browser readable service data file (44);
at least one web page(22) adapted to display information in the service data files and prompt for user input (60) in response thereto; and
a call scripting process (62) adapted to continuously receive the user inputs (60) entered on the at least one web page and communicate the user inputs to the service creation environment.

2. The web interface, as set forth in claim 1, wherein the at least one web page comprises java programs (50).

3. The web interface, as set forth in claim 1, wherein the service logic parser is coded in a scripting language.

4. The web interface, as set forth in claim 1, further comprising a callgenerator (70) residing in the service creation environment adapted to continuously receive the user inputs from the call scripting process and continuously communicate the user inputs to a service switching point (15) for execution.

5. The web interface, as set forth in claim 1, further comprising a call generator (70) residing in the service creation environment adapted to continuously receive the user inputs from the call scripting process and continuously communicate the user inputs to a service control point (17) for database update.

6. The web interface, as set forth in claim 1, further comprising a call script (64) generated by the call scripting process from the user inputs and communicated to the service creation environment.

7. The web interface, as set forth in claim 1, wherein the service data file is in hypertext markup language format.

8. The web interface, as set forth in claim 1, wherein the service logic description comprises a description of a number of web pages, including title, graphical devices for receiving user input, and the logic flow of the web pages.

9. The web interface, as set forth in claim 1, further comprising a web browser (23) executing on a user device (21) adapted to receive the at least one web page over the internet, display the at least one web page, and receive user input entered via the user device.

10. The web interface, as set forth in claim 1, wherein the service logic description describes a premium rate service.

11. The web interface, as set forth in claim 1, wherein the service logic description describes a free phone service.

12. The web interface, as set forth in claim 1, wherein the service logic description describes a calling card service.

13. The web interface, as set forth in claim 1, wherein the service logic description describes a debit card service.

14. A method of providing web interface (12) to a service creation environment (14), comprising the steps of:
parsing, using a service logic parser (42), a service logic description (32) and generating a web browser readable service data file (44) therefrom;
displaying, using at least one web page (22), information in the service data files and prompting for user input (60)in response thereto; and
continuously receiving, using a call scripting process (62),the user inputs entered on the at least one web page and continuously communicating the user inputs to the service creation environment.

15. The method, as set forth in claim 14, wherein the at least one web page comprises at least one java applet (50)

16. The method, as set forth in claim 14, wherein the service logic parser is coded in a scripting language.

17. The method, as set forth in claim 14, further comprising:
continuously receiving, using a call generator (70) residing in the service creation environment in a telecommunications network, the user inputs from the call scripting process and continuously communicating the user inputs to a service switching point (15) in the telecommunications network for execution.

18. The method, as set forth in claim 14, further comprising:
continuously receiving, using a call generator (70) residing in the service creation environment in a telecommunications network, the user inputs from the call scripting process and continuously communicating the user inputs to a service control point (17) in the telecommunications network for database update.

19. The method, as set forth in claim 14, further comprising:
generating a call script file (64) using the call scripting process from the user inputs and communicated to the telecommunications network node.

20. The method, as set forth in claim 14, wherein the service data file is in hypertext markup language format.

21. The method, as set forth in claim 14, wherein the service logic description comprises a description of a number of web pages, including title, graphical devices for receiving user input, and the logic flow of the web pages.

22. The method, as set forth in claim 14, further comprising: executing a web browser (23) on a user device (21) adapted to receive the at least one web page over the internet, displaying the at least one web page, and receiving user input entered via the user device.

23. The method, as set forth in claim 14, further comprising: storing the at least one web pages on a web server and executing the service logic parser and call scripting process.

24. The method, as set forth in claim 14, wherein the service creation environment comprises a node in a telecommunications network.

## Patentansprüche

1. Web-Schnittstelle (12) zu einer Diensterstellungs-Umgebung (14), beinhaltend
einen Dienst-Logikparser (42), der dafür ausgelegt ist, eine Dienstlogikbeschreibung (32) von der Diensterstellungs-Umgebung zu empfangen, die Dienstlogikbeschreibung zu analysieren und eine von einem Web-Browser lesbare Dienst-Datendatei (44) zu erzeugen,
mindestens eine Webseite (22), die dafür ausgelegt ist, Informationen in den Dienst-Datendateien anzuzeigen und als Reaktion darauf zu Benutzereingaben (60) aufzufordern, und
einen Anruf-Scriptingprozeß (62), der dafür ausgelegt ist, kontinuierlich die auf der mindestens einen Webseite eingegebenen Benutzereingaben (60) zu empfangen und die Benutzereingaben an die Diensterstellungs-Umgebung zu übermitteln.

2. Web-Schnittstelle gemäß Anspruch 1, in welcher die mindestens eine Webseite Java-Programme (50) beinhaltet.

3. Web-Schnittstelle gemäß Anspruch 1, in welcher der Dienst-Logikparser in einer Scripting-Sprache kodiert ist.

4. Web-Schnittstelle gemäß Anspruch 1, ferner beinhaltend einen in der Diensterstellungs-Umgebung resident vorhandenen Anrufgenerator (70), der dafür ausgelegt ist, kontinuierlich die Benutzereingaben vom Anruf-Scriptingprozeß zu empfangen und die Benutzereingaben kontinuierlich an einen Dienstvermittlungspunkt (15) zur Ausführung zu übermitteln.

5. Web-Schnittstelle gemäß Anspruch 1, ferner beinhaltend einen in der Diensterstellungs-Umgebung resident vorhandenen Anrufgenerator (70), der dafür ausgelegt ist, kontinuierlich die Benutzereingaben vom Anruf-Scriptingprozeß zu empfangen und die Benutzereingaben kontinuierlich an einen Dienstvermittlungspunkt (17) zur Datenbankaktualisierung zu übermitteln.

6. Web-Schnittstelle gemäß Anspruch 1, ferner beinhaltend ein Anrufscript (64), das vom Anruf-Scriptingprozeß aus den Benutzereingaben erzeugt und an die Diensterstellungs-Umgebung übermittelt wird.

7. Web-Schnittstelle gemäß Anspruch 1, in welcher die Dienst-Datendatei im Hypertext-Markup-Language-Format vorliegt.

8. Web-Schnittstelle gemäß Anspruch 1, in welcher die Dienstlogikbeschreibung eine Beschreibung einer Anzahl von Webseiten einschließlich Titel, Grafikelemente zum Empfangen von Benutzereingaben und den logischen Anlauf der Webseiten beinhaltet.

9. Web-Schnittstelle gemäß Anspruch 1, ferner beinhaltend einen Web-Browser (23), der auf einem Benutzergerät (21) ausgeführt wird und dafür ausgelegt ist, die mindestens eine Webseite über das Internet zu empfangen, die mindestens eine Webseite anzuzeigen und Benutzereingaben zu empfangen, die über das Benutzergerät eingegeben werden.

10. Web-Schnittstelle gemäß Anspruch 1, in welcher die Dienstlogikbeschreibung einen Mehrwertdienst beschreibt.

11. Web-Schnittstelle gemäß Anspruch 1, in welcher die Dienstlogikbeschreibung einen Freephone-Dienst beschreibt.

12. Web-Schnittstelle gemäß Anspruch 1, in welcher die Dienstlogikbeschreibung einen Telefonkarten-Dienst beschreibt.

13. Web-Schnittstelle gemäß Anspruch 1, in welcher die Dienstlogikbeschreibung einen Debitkarten-Dienst beschreibt.

14. Verfahren zur Bereitstellung einer Web-Schnittstelle (12) gegenüber einer Diensterstellungs-Umgebung (14), beinhaltend die Schritte,
unter Verwendung eines Dienst-Logikparsers (42) eine Dienstlogikbeschreibung (32) zu analysieren und daraus eine von einem Web-Browser lesbare Dienst-Datendatei (44) zu erzeugen,
unter Verwendung mindestens einer Webseite (22) Informationen in den Dienst-Datendateien anzuzeigen und als Reaktion darauf zu Benutzereingaben (60) aufzufordern und
unter Verwendung eines Anruf-Scriptingprozesses (62) kontinuierlich die auf der mindestens einen Webseite eingegebenen Benutzereingaben zu empfangen und die Benutzereingaben kontinuierlich an die Diensterstellungs-Umgebung zu übermitteln.

15. Verfahren gemäß Anspruch 14, in welchem die mindestens eine Webseite mindestens ein Java-Applet (50) beinhaltet.

16. Verfahren gemäß Anspruch 14, in welchem der Dienst-Logikparser in einer Scripting-Sprache kodiert ist.

17. Verfahren gemäß Anspruch 14, ferner beinhaltend die Schritte,
unter Verwendung eines in der Diensterstellungs-Umgebung in einem Telekommunikationsnetz resident vorhandenen Anrufgenerators (70) kontinuierlich die Benutzereingaben vom Anruf-Scriptingprozeß zu empfangen und die Benutzereingaben kontinuierlich an einen Dienstvermittlungspunkt (15) im Telekommunikationsnetz zur Ausführung zu übermitteln.

18. Verfahren gemäß Anspruch 14, ferner beinhaltend die Schritte,
unter Verwendung eines in der Diensterstellungs-Umgebung in einem Telekommunikationsnetz resident vorhandenen Anrufgenerators (70) kontinuierlich die Benutzereingaben vom Anruf-Scriptingprozeß zu empfangen und die Benutzereingaben kontinuierlich an einen Dienstvermittlungspunkt (17) im Telekommunikationsnetz zur Datenbankaktualisierung zu übermitteln.

19. Verfahren gemäß Anspruch 14, ferner beinhaltend die Schritte,
unter Verwendung des Anruf-Scriptingprozesses aus den Benutzereingaben eine Anruf-Scriptdatei (64) zu erzeugen und an die Diensterstellungs-Umgebung im Telekommunikationsnetzknoten zu übermitteln.

20. Verfahren gemäß Anspruch 14, in welchem die Dienst-Datendatei im Hypertext-Markup-Language-Format vorliegt.

21. Verfahren gemäß Anspruch 14, in welchem die Dienstlogikbeschreibung eine Beschreibung einer Anzahl von Webseiten einschließlich Titel, Grafikelemente zum Empfangen von Benutzereingaben und den logischen Anlauf der Webseiten beinhaltet.

22. Verfahren gemäß Anspruch 14, ferner beinhaltend einen Web-Browser (23), der auf einem Benutzergerät (21) ausgeführt wird und dafür ausgelegt ist, die mindestens eine Webseite über das Internet zu empfangen, die mindestens eine Webseite anzuzeigen und über das Benutzergerät eingegebene Benutzereingaben zu empfangen.

23. Verfahren gemäß Anspruch 14, ferner beinhaltend die Schritte, die mindestens eine Webseite auf einem Webserver zu speichern und den Dienst-Logikparser sowie den Anruf-Scriptingprozeß auszuführen.

24. Verfahren gemäß Anspruch 14, in welchem die Diensterstellungs-Umgebung einen Knoten in einem Telekommunikationsnetz beinhaltet.

## Revendications

1. Interface Web (12) pour un environnement de création de services (14), comprenant :
un analyseur de logique de service (42) apte à recevoir une description de logique de service (32) de l'environnement de création de services, à analyser la description de logique de service et à générer un fichier de données de service (44) lisible par un navigateur Web ;
au moins une page Web (22) apte à présenter des informations dans les fichiers de données de service et à demander à l'utilisateur une entrée (60) en réponse à celles-ci ; et
un processus d'établissement de scripts de traitement des appels (62) apte à recevoir en continu les entrées de l'utilisateur (60) entrées sur la ou les pages Web et à communiquer les entrées de l'utilisateur à l'environnement de création de services.

2. Interface Web selon la revendication 1, dans laquelle la ou les pages Web comprennent des programmes Java (50).

3. Interface Web selon la revendication 1, dans laquelle l'analyseur de logique de service est codé dans un langage de script.

4. Interface Web selon la revendication 1, comprenant en outre un générateur d'appels (70) résidant dans l'environnement de création de services, apte à recevoir en continu les entrées de l'utilisateur en provenance du processus d'établissement de scripts de traitement des appels et à communiquer en continu les entrées de l'utilisateur à un commutateur d'accès aux services (15) pour exécution.

5. Interface Web selon la revendication 1, comprenant en outre un générateur d'appels (70) résidant dans l'environnement de création de services, apte à recevoir en continu les entrées de l'utilisateur en provenance du processus d'établissement de scripts de traitement des appels et à communiquer en continu les entrées de l'utilisateur à un point de commande de services-réseau (17) pour mise à jour d'une base de données.

6. Interface Web selon la revendication 1, comprenant en outre un script de traitement des appels (64) généré par le processus d'établissement de scripts de traitement des appels à partir des entrées de l'utilisateur et communiqué à l'environnement de création de services.

7. Interface Web selon la revendication 1, dans laquelle le fichier de données de service est dans un format de langage de balisage hypertexte html.

8. Interface Web selon la revendication 1, dans laquelle la description de logique de service comprend une description d'un certain nombre de pages Web, y compris un titre, des dispositifs graphiques pour recevoir une entrée de l'utilisateur, et le flux logique des pages Web.

9. Interface Web selon la revendication 1, comprenant un outre un navigateur Web (23) s'exécutant sur un dispositif d'utilisateur (21) apte à recevoir la ou les pages Web sur Internet, à afficher la ou les pages Web et à recevoir l'entrée de l'utilisateur entrée via le dispositif de l'utilisateur.

10. Interface Web selon la revendication 1, dans laquelle la description de logique de service décrit un service de tarif majoré.

11. Interface Web selon la revendication 1, dans laquelle la description de logique de service décrit un service de téléphone gratuit.

12. Interface Web selon la revendication 1, dans laquelle la description de logique de service décrit un service de carte d'appel.

13. Interface Web selon la revendication 1, dans laquelle la description de logique de service décrit un service de carte de débit.

14. Procédé de fourniture d'une interface Web (12) à un environnement de création de services (14), comprenant les étapes suivantes :
analyser, au moyen d'un analyseur de logique de service (42), une description de logique de service (32) et générer un fichier de données de service (44) lisible par un navigateur Web à partir de celle-ci ;
présenter, au moyen d'au moins une page Web (22), des informations dans les fichiers de données de service et demander à l'utilisateur une entrée (60) en réponse à celles-ci ; et
recevoir en continu, au moyen d'un processus d'établissement de scripts de traitement des appels (62), les entrées de l'utilisateur entrées sur la ou les pages Web et communiquer en continu les entrées de l'utilisateur à l'environnement de création de services.

15. Procédé selon la revendication 14, dans lequel la ou les pages Web comprennent au moins un applet Java (50).

16. Procédé selon la revendication 14, dans lequel l'analyseur de logique de service est codé dans un langage d'établissement de scripts.

17. Procédé selon la revendication 14, comprenant en outre :
la réception en continu, au moyen d'un générateur d'appels (70) résidant dans l'environnement de création de services d'un réseau de télécommunication, des entrées de l'utilisateur en provenance du processus d'établissement de scripts de traitement des appels et la communication en continu des entrées de l'utilisateur à un commutateur d'accès aux services (15) du réseau de télécommunications pour exécution.

18. Procédé selon la revendication 14, comprenant en outre :
la réception en continu, au moyen d'un générateur d'appels (70) résidant dans l'environnement de création de services d'un réseau de télécommunications, des entrées de l'utilisateur en provenance du processus d'établissement de scripts de traitement des appels et la communication en continu des entrées de l'utilisateur à un point de commande de services-réseau (17) du réseau de télécommunications pour mise à jour d'une base de données.

19. Procédé selon la revendication 14, comprenant en outre :
la création d'un fichier de scripts de traitement des appels (64) au moyen du processus d'établissement de scripts de traitement des appels à partir des entrées de l'utilisateur et communiqué au noeud du réseau de télécommunications.

20. Procédé selon la revendication 14, dans lequel le fichier de données de service est dans un format de langage de balisage hypertexte html.

21. Procédé selon la revendication 14, dans lequel la description de logique de service comprend une description d'un certain nombre de pages Web, y compris un titre, des dispositifs graphiques pour recevoir une entrée de l'utilisateur, et le flux logique des pages Web.

22. Procédé selon la revendication 14 comprenant en outre : l'exécution d'un navigateur Web (23) sur un dispositif d'utilisateur (21) apte à recevoir la ou les pages Web sur Internet, l'affichage de la ou des pages Web et la réception de l'entrée de l'utilisateur entrée via le dispositif de l'utilisateur.

23. Procédé selon la revendication 14 comprenant en outre : le stockage de la ou des pages Web sur un serveur Web et l'exécution de l'analyseur de logique de service et du processus d'établissement de scripts de traitement des appels.

24. Procédé selon la revendication 14, dans lequel l'environnement de création de services comprend un noeud du réseau de télécommunications.
